Europäisches Patentamt

European Patent Office

Office européen des brevets

(11) Veröffentlichungsnummer: **0 289 793**
**A2**

## (12) EUROPÄISCHE PATENTANMELDUNG

(21) Anmeldenummer: 88105491.0

(51) Int. Cl.4: **G01K 7/04**

(22) Anmeldetag: 07.04.88

(30) Priorität: 06.05.87 DE 8706440 U

(43) Veröffentlichungstag der Anmeldung:
09.11.88 Patentblatt 88/45

(84) Benannte Vertragsstaaten:
DE FR GB IT NL SE

(71) Anmelder: TESTOTERM MESSTECHNIK GMBH
& CO.
Kolumban-Kayser-Strasse 17
D-7825 Lenzkirch(DE)

(72) Erfinder: Demisch, Ullrich, Dr. Dipl.-Phys.
Hildastrasse 42
D-7800 Freiburg(DE)
Erfinder: Lohrer, Roland
Steinbühlweg 5
D-7825 Lenzkirch(DE)

(74) Vertreter: Patentanwälte Dipl.-Ing. Klaus
Westphal Dr. rer. nat. Bernd Mussgnug Dr.
rer.nat. Otto Buchner
Waldstrasse 33
D-7730 VS-Villingen(DE)

(54) Oberflächen-Temperaturfühler.

(57) Bei einem Oberflächen-Temperaturfühler mit einer gegen die zu messende Oberfläche eines Meßobjekts zu drückenden Verbindungsstelle eines Thermoelements besteht letzteres aus selbsttragenden und federnden Metallbändern, die einander kreuzen und im Kreuzungspunkt elektrisch miteinander verbunden sind, wobei ihre Enden von der zu messenden Oberfläche weg gebogen sind.

Figur 1

## OBERFLÄCHEN-TEMPERATURFÜHLER

Die Erfindung betrifft einen Oberflächen-Temperatur fühler nach dem Oberbegriff des Anspruchs 1.

Ein derartiger Oberflächen-Temperaturfühler ist aus der US-PS 4 279 154 bekannt. Das Thermoelement ist bei diesem bekannten Temperaturfühler aus zwei an der Verbindungsstelle zusammenstoßenden Metallbändern gebildet, die in eine elektrisch isolierende Schutzschicht aus Kunststoff, Lack, Farbe oder dgl. eingebettet sind. Die die Verbindungsstelle bildenden Metallbänder werden federnd an den zu messenden Gegenstand angelegt. Die Schutzschicht hält die Bänder zusammen und soll insbesondere verhindern, daß beim Anlegen des Thermoelements an einen bewegten Gegenstand, beispielsweise eine Walze oder dgl., eine Beschädigung dieses Gegenstandes eintritt. Wegen der Schutzschicht muß aber in Kauf genommen werden, daß bei feinen Temperaturmessungen eine Verfälschung der Meßtemperatur eintritt. Es fließt jeweils einige Wärme in die die Verbindungsstelle der beiden Bänder umgebende Isolier schicht ab, bevor das Thermoelement selbst die richtige Temperatur angenommen hat. Ferner ist bei häufiger Benutzung die Verbindungsstelle ständig elastischen Verformungen unterworfen, die zu einem Brechen der Lötstelle führen könnten.

Aus der DE-PS 533 072 ist ferner ein Temperaturfühler bekannt, bei welchem ein Thermoelement-Draht zwischen den Enden eines Bügels eingespannt ist. Zum Messen werden von innen her zwei umklappbare Hebel gegen die Verbindungsstelle geschwenkt und drücken diese durch Federkraft gegen das Meßobjekt. Diese Lösung weist jedoch den Nachteil auf, daß die genannten Hebel eine nicht vernachlässigbare Wärmemenge von der Meßstelle ableiten und dadurch das Meßergebnis erheblich verfälschen können.

Bei einem anderen aus der DE-PS 676 223 bekannten Temperaturfühler wird der durch einen Bügel gespannte Thermoelement-Draht durch einen darüberliegenden Bimetallstreifen bei Erwärmung desselben gegen die Meßstelle gedrückt. Auch hier wird jedoch die zum Durchbiegen des Bimetallstreifens erforderliche Wärme dem Meßobjekt entzogen und dadurch das Meßergebnis verfälscht.

Ferner ist aus der FR-PS 1 236 109 bekannt, das Andrükken des Thermoelement-Drahts durch dahinterliegende Magnete zu bewerkstelligen. Damit wird jedoch die Verwendung des Temperaturfühlers auf Meßobjekte aus ferromagnetischem Material beschränkt.

Schließlich ist aus der DE-PS 1 773 223 die Anordnung je einer Hilfsfeder parallel zum Thermoelement-Draht bekannt. Ein Tragteil ist in der Mitte der Hilfsfedern an deren Ober-oder Unterseite befestigt. Hierdurch stützt das Tragteil den Thermoelement-Draht an oder nahe der Lötstelle und begünstigt daher die Kontaktierung der zu messenden Oberfläche an dieser Stelle. Die Wärmeableitung von der Lötstelle in das Tragteil und die beiden Hilfsfedern ist zwar bei dieser bekannten Ausführungsform geringer, da das Tragteil ebenfalls durch Anlage an der zu messenden Oberfläche durch diese erwärmt wird, jedoch kann eine Verfälschung der Meßtemperatur durch die Stützteile auch hier nicht ganz vermieden werden.

Der Erfindung liegt daher die Aufgabe zugrunde, einen Oberflächen-Temperaturfühler zu - schaffen, bei dem die Verbindungsstelle des Thermoelements auf konstruktiv einfache Weise und ohne Verwendung wärmeaufnehmender Andrückteile oder Schutzschichten wirksam und ohne Verfälschung der Meßwerte gegen die Oberfläche eines Meßobjekts gedrückt wird.

Die Aufgabe wird erfindungsgemäß bei einem Temperaturfühler der eingangs genannten Art durch die kennzeichnenden Merkmale des Anspruchs 1 gelöst.

Diese selbsttragende und sehr stabile federnde Ausführung des Thermoelements reduziert die für die Herstellung erforderlichen Bauteile im wesentlichen auf die beiden Bänder selbst und vermeidet damit jegliche zusätzliche Wärmeableitung von der vorgesehenen Meßstelle.

Die Unteransprüche sind auf vorteilhafte Ausgestaltungen der Erfindung gerichtet.

Anhand der Figuren wird ein Ausführungsbeispiel der Erfindung näher erläutert. Es zeigt:

Fig. 1 den Meßkopf eines Temperaturfühlers gemäß der Erfindung im Seitenriß, teilweise geschnitten,

Fig. 2 eine Draufsicht auf den Temperaturfühler von Fig. 1 und

Fig. 3 den oberen Teil des gegen die Oberfläche eines Meßobjekts angelegten Meßkopfes von Fig. 1.

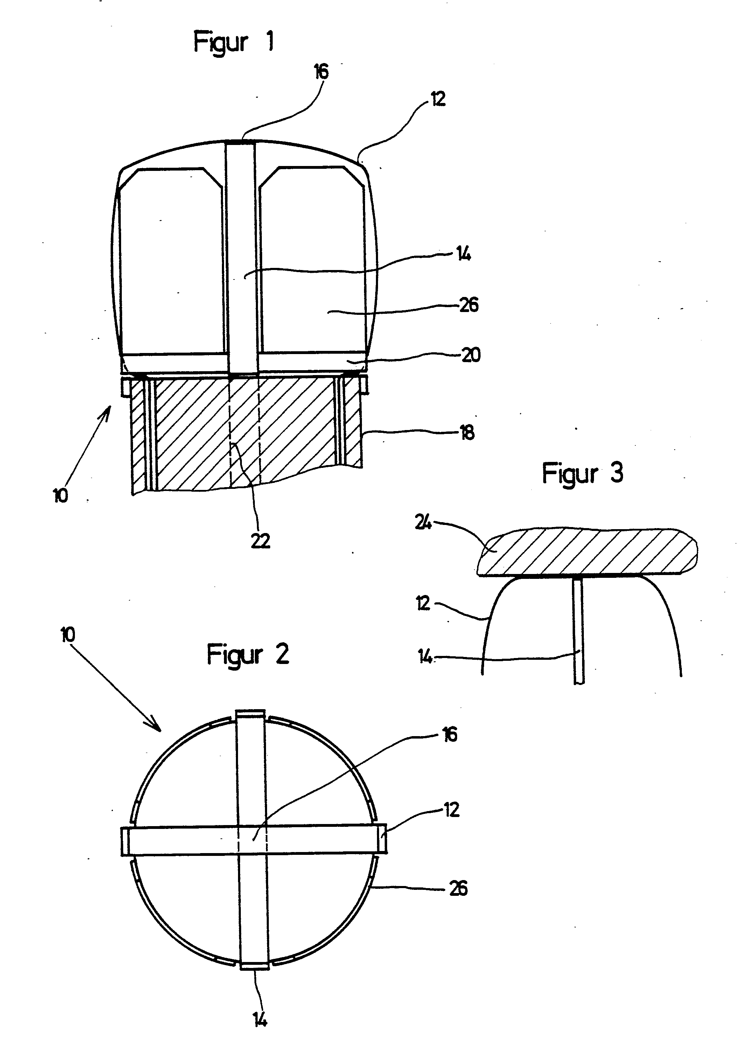

Wie aus Fig. 1 und 2 ersichtlich, besteht der allgemein mit 10 bezeichnete Meßkopf des Temperaturfühlers aus einem Nickelchromband 12 und einem senkrecht dazu angeordneten Nickelband 14. Die beiden Bänder 12 und 14 sind in ihrem Kreuzungspunkt 16 in geeigneter Weise, z.B. durch Punktschweißung, miteinander verbunden. Sie bestehen aus federhartem Material, das vorzugsweise eine Zugfestigkeit in der Größenordnung von 1300 bis 1500 N/mm$^2$ besitzt. In einer Entfernung von Kreuzungspunkt 16, welche etwa dem Radius des Meßkopfes 10 entspricht, sind die beiden Bänder jeweils nach rückwärtes, d.h. von der Meßstelle wegweisend, umgebogen und in entsprechende Bohrungen eines zylindrischen Isolierstücks 18 eingesetzt. Das Isolierstück 18 enthält die (nicht gezeigten) elektrischen Anschlüsse.

Vor dem Eintritt in die Bohrungen des Isolierstücks 18 sind die Enden der Bänder 12 und 14 mit einem Stufenknick versehen, da der Lockkreisdurchmesser dieser Bohrungen kleiner ist als der Außendurchmesser des Isolierstücks 18, in dessen Verlängerung die Bandenden zunächst verlaufen. Auf die parallel zur Stirnfläche des Isolierstücks 18 verlaufenden Teile des genannten Stufenknicks ist von oben eine Isolierscheibe 20 aufgesetzt, deren Durchmesser demjenigen des Isolierstücks 18 entspricht. Sowohl das Isolierstück 18 als die Isolierscheibe 20 besteht aus einem Material mit hohem elektrischem und thermischem Widerstand. Durch den Mittelpunkt des zylindrischen Isolierstücks 18 verläuft eine Bohrung 22, der am oberen Ende eine in die Isolierscheibe 20 eingebrachte Gewindebohrung entspricht. Durch die Bohrung 22 ist von unten eine (nicht gezeigte) Schraube eingesetzt, welche in das Gewinde der Isolierscheibe 20 eingreift und diese gegen das Isolierstück 18 anpreßt und dadurch die Enden der Bänder 12 und 14 festklemmt.

Durch die zurückgebogene Form der Bänder 12 und 14 entsteht in den in Fig. 2 sichtbaren Teilen dieser Bänder eine Federspannung, welche den Kreuzungspunkt 16 nach außen, d.h. gegen die Oberfläche eines Meßobjekts 24 preßt, wie in Fig. 3 dargestellt. Durch diesen Aufbau des Meßkopfes ergibt sich eine selbsttragende Konstruktion, für die keine zusätzlichen Stütz-oder Andrückteile erforderlich sind. Auch die Fertigung und die Montage des Meßkopfs gemäß der Erfindung ist äußerst einfach und zweckentsprechend.

Zum Schutz gegen mechanische Beschädigung kann auf das Isolierstück 18 ein im wesentlichen zylindrischer Schutzkäfig aufgesetzt sein, aus dem in Abständen von je 90° axial verlaufende Schlitze ausgeschnitten sind, in welchen die zurückgebogenen Enden der Bänder 12 und 14 verlaufen, so daß die verbleibenden Teile des Schutzkäfigs Füllwände 24 zwischen den Bändern 12 und 14 bilden.

## Ansprüche

1. Oberflächen-Temperaturfühler mit einem Thermoelement, bestehend aus zwei Metallbändern, die aus in der thermoelektrischen Spannungsreihe voneinander entfernten Metallen bestehen und miteinander verbunden sind, wobei die Verbindungsstelle gegen die zu messende Oberfläche eines Meßobjektes zu drücken ist, dadurch gekennzeichnet, daß die Metallbänder (12, 14) kreuzförmig zueinander angeordnet und im Kreuzungspunkt miteinander verbunden sind, wobei sie selbst tragend ausgebildet sind und aus federhartem Material bestehen.

2. Vorrichtung nach Anspruch 1, dadurch gekennzeichnet, daß die Enden der Metallbänder (12, 14) durch eine Isolierscheibe (20) in ein Isolierstück (18) mit hohem elektrischem und thermischem Widerstand geführt und von der Isolierscheibe (20) gegen dasselbe angepreßt sind.

3. Vorrichtung nach Anspruch 1 oder 2, dadurch gekennzeichnet, daß die beiden Metallbänder (12, 14) in ihrem Kreuzungspunkt (16) durch Schweißen, insbesondere Punktschweißen oder dgl., elektrisch miteinander verbunden sind.

4. Vorrichtung nach einem der vorangehenden Ansprüche, dadurch gekennzeichnet, daß das Thermoelement aus einem Nickelchromtand (12) und einem Nickelband (14) besteht, welche vorzugsweise eine Zugfestigkeit von 1300 bis 1500 N/mm² besitzen.

5. Vorrichtung nach einem der vorangehenden Ansprüche, dadurch gekennzeichnet, daß die weggebogenen Enden der Metallbänder (12, 14) zwischen Füllwänden (26) eines Schutzkäfigs verlaufen.

Figur 1

Figur 3

Figur 2